# EUROPEAN PATENT APPLICATION

(11) **EP 4 827 065 A1**
(43) Date of publication of application: **21.10.2026**
(21) Application number: 24916329.6
(22) Date of filing: 24.07.2024
(51) Int. Cl.: H04L 43/0823

(54) **OVERHEAD PROCESSING METHOD AND APPARATUS, AND STORAGE MEDIUM AND ELECTRONIC APPARATUS**

(30) Priority: 08.01.2024 CN 202410030033
(71) Applicant: ZTE CORPORATION, Shenzhen, Guangdong 518057 (CN)
(72) Inventor: ZHANG, Yuanbin, Shenzhen, Guangdong 518057 (CN); XIA, Huilong, Shenzhen, Guangdong 518057 (CN)
(74) Representative: Chimini, Francesco
(86) International application number: PCT/CN2024/107381
(87) International publication number: WO 2025/148273

(57) **Abstract**

Provided in the embodiments of the present invention are an overhead processing method and apparatus, and a storage medium and an electronic apparatus. The method comprises: extracting a frame header indication overhead from a current service layer container, on the basis of the frame header indication overhead of the current service layer container, calculating an expected frame header indication overhead of the next service layer container, wherein the frame header indication overhead has a value other than 0x1FF; and comparing the expected frame header indication overhead with a frame header indication overhead extracted from the next service layer container, and if a first predetermined number of consecutive comparison results are consistent, entering a synchronization state, wherein the frame header indication overhead represents the number of byte blocks between a first new client service frame header and a starting boundary of the service layer container.

## Description

### Cross-Reference to Related Application

The present disclosure claims priority to Chinese Patent Application No. CN202410030033.4 entitled "Overhead Processing Method and Apparatus, and Storage Medium and Electronic Apparatus" filed on January 8, 2024, the entire content of which is incorporated herein by reference.

### Technical Field

Embodiments of the present disclosure relate to the field of communications, and in particular, to an overhead processing method and apparatus, and a storage medium and an electronic apparatus.

### Background

A flexible Optical Transport Network (OTN) Digital Unit (fgODUflex) serves as a container for carrying small-granularity services in an OTN. A Virtual Container-n (VC-n) can be efficiently carried over the fgODUflex. The VC-n has a fixed frame length. When demapping a client service from the fgODUflex, it is required to first identify the frame boundary of the VC-n before parsing the service. Since the VC-n is not provided with frame alignment overheads, a dedicated overhead is defined in the fgODUflex to indicate the position of a frame start of the VC-n within the fgODUflex. During transmission, bit errors will result in an erroneous overhead, and this may make it impossible to accurately identify the frame boundary of the VC-n, and thus disables normal parsing of the client service. Therefore, detecting such erroneous overhead is a key technical problem to be solved.

### Summary

The embodiments of the present disclosure provide an overhead processing method and apparatus, and a storage medium and an electronic apparatus, which may at least solve the problem of erroneous overhead caused by transmission errors in the related art.

According to an embodiment of the present disclosure, an overhead processing method is provided, including: extracting a frame start indication overhead from a current server layer container; calculating an expected frame start indication overhead of a next server layer container based on the frame start indication overhead of the current server layer container, wherein the frame start indication overhead of the current server layer container has a value different from 0x1FF; and comparing the expected frame start indication overhead with a frame start indication overhead extracted from the next server layer container, and entering an in-frame state if a first predetermined number of consecutive comparison results indicate that the expected frame start indication overhead is equal to the extracted frame start indication overhead, wherein the frame start indication overhead indicates a number of byte blocks between a start boundary of a server layer container and a start of a first new client frame.

In an exemplary embodiment, a value of the expected frame start indication overhead of the next server layer container is calculated based on at least one of: a length of a client frame, a first number of client byte blocks carried in the current server layer container, a second number of client byte blocks carried in the next server layer container, the frame start indication overhead of the current server layer container.

In an exemplary embodiment, calculating the expected frame start indication overhead of the next server layer container based on the frame start indication overhead of the current server layer container includes: determining a third number of byte blocks for carrying a client frame in the current server layer container based on the frame start indication overhead of the current server layer container, the first number of client byte blocks carried in the current server layer container, and a length of a client frame; and determining the expected frame start indication overhead of the next server layer container based on a second number of client byte blocks carried in the next server layer container, the third number and the length of the client frame.

In an exemplary embodiment, determining the third number of the byte blocks for carrying the client frame in the current server layer container based on the frame start indication overhead of the current server layer container, the first number of the client byte blocks carried in the current server layer container, and the length of the client frame includes: determining a first modulo result by performing a modulo operation with a calculation result of the first number and the frame start indication overhead of the current server layer container as a dividend and the length of the client frame as a divisor; determining the third number to be equal to the first modulo result if the first modulo result is not zero; determining the third number to be equal to the length of the client frame if the first modulo result is zero.

In an exemplary embodiment, determining the expected frame start indication overhead of the next server layer container based on the second number of the client byte blocks carried in the next server layer container, the third number and the length of the client frame includes: determining a fourth number of byte blocks for carrying the client frame in the next server layer container based on the third number and the length of the client frame; determining the expected frame start indication overhead of the next server layer container to be equal to the fourth number if the fourth number is less than or equal to a first difference value between the second number and a predetermined value; determining the expected frame start indication overhead of the next server layer container to be equal to 0x1FF if the fourth number is greater than the first difference value between the second number and the predetermined value.

In an exemplary embodiment, the overhead processing method further includes: determining a fifth number of byte blocks for carrying a client frame in the next server layer container based on the expected frame start indication overhead of the next server layer container and the second number, if the fourth number is less than or equal to the first difference value between the second number and the predetermined value.

In an exemplary embodiment, determining the fifth number of the byte blocks for carrying the client frame in the next server layer container based on the expected frame start indication overhead of the next server layer container and the second number includes: determining a second modulo result by performing a modulo operation with a second difference value between the second number and the expected frame start indication overhead of the next server layer container as a dividend and the length of the client frame as a divisor; and determining the fifth number based on the second modulo result.

In an exemplary embodiment, determining the fifth number based on the second modulo result includes: determining the fifth number to be equal to the second modulo result if the second modulo result is not zero; determining the fifth number to be equal to the length of the client frame if the second modulo result is zero.

In an exemplary embodiment, the overhead processing method further includes: determining a sixth number of byte blocks for carrying a client frame in the next server layer container based on the third number and the second number, if the fourth number is greater than the first difference value between the second number and the predetermined value.

In an exemplary embodiment, the overhead processing method further includes: determining an expected frame start indication overhead of a next server layer container by taking a calculated number of byte blocks for carrying a client frame in the next server layer container as the third number and taking a number of client byte blocks carried in the next server layer container as the second number.

According to another embodiment of the present disclosure, an overhead processing method is provided, including: extracting a first overhead and a second overhead from a target server layer container, wherein the first overhead and the second overhead are two adjacent overheads, and both the first overhead and the second overhead are used for indicating multiframe information of the target server layer container; and entering an in-multiframe state if a value of the first overhead and a value of the second overhead are identical and a third overhead corresponding to the value of the first overhead has a value different from 0b111, or if the value of the first overhead and the value of the second overhead conform to a preset sequence and the third overhead corresponding to the value of the first overhead has a value of 0b111.

In an exemplary embodiment, the preset sequence is a cycle of values from 0 to 10.

According to another embodiment of the present disclosure, an overhead processing apparatus is provided, including: a first extraction module, configured to extract a frame start indication overhead from a current server layer container; a calculation module, configured to calculate an expected frame start indication overhead of a next server layer container based on the frame start indication overhead of the current server layer container, wherein the frame start indication overhead of the current server layer container has a value different from 0x1FF; and a comparison module, configured to compare the expected frame start indication overhead with a frame start indication overhead extracted from the next server layer container, and enter an in-frame state if a first predetermined number of consecutive comparison results indicate that the expected frame start indication overhead is equal to the extracted frame start indication overhead, wherein the frame start indication overhead indicates a number of byte blocks between a start boundary of a server layer container and a start of a first new client frame.

According to another embodiment of the present disclosure, an overhead processing apparatus is provided, including: a second extraction module, configured to extract a first overhead and a second overhead from a target server layer container, wherein the first overhead and the second overhead are two adjacent overheads, and both the first overhead and the second overhead are used for indicating multiframe information of the target server layer container; and a synchronization module, configured to enter an in-multiframe state if a value of the first overhead and a value of the second overhead are identical and a third overhead corresponding to the value of the first overhead has a value different from 0b111, or if the value of the first overhead and the value of the second overhead conform to a preset sequence and the third overhead corresponding to the value of the first overhead has a value of 0b111.

According to still another embodiment of the present disclosure, a computer-readable storage medium is further provided. A computer program is stored in the computer-readable storage medium, and the computer program, when executed by a processor, causes the processor to implement operations of any one of the foregoing method embodiments.

According to still another embodiment of the present disclosure, an electronic apparatus is further provided, including a memory and a processor. A computer program is stored in the memory, and the processor is configured to execute the computer program to implement operations of any one of the foregoing method embodiments.

### Brief Description of the Drawings

Fig. 1 is a block diagram of the hardware structure of a mobile terminal for implementing an overhead processing method according to some embodiments of the present disclosure;
Fig. 2 is a first flowchart of an overhead processing method according to some embodiments of the present disclosure;
Fig. 3 is a second flowchart of an overhead processing method according to some embodiments of the present disclosure;
Fig. 4 is a first structural block diagram of an overhead processing apparatus according to some embodiments of the present disclosure; and
Fig. 5 is a second structural block diagram of an overhead processing apparatus according to some embodiments of the present disclosure.

### Detailed Description of the Embodiments

The embodiments of the present disclosure will be described in detail below with reference to the accompanying drawings and embodiments.

It should be noted that the terms "first", "second" and the like in the specification, claims and the accompanying drawings of the present disclosure are used to distinguish similar objects, and are not necessarily used to describe a specific sequence or order.

Related technologies involved in the present disclosure are first described as follows:
An Optical Transport Network (OTN) is mainly configured to carry large-granularity services with a rate above 1G. Carrying client services with a rate below 1G over the OTN will cause bandwidth waste. For example, carrying a 10M service over an Optical channel Data Unit 0 (ODU0) with a rate of 1.25G will result in considerable bandwidth waste. To better support the carrying of client services with a rate below 1G, international standard organizations are discussing technologies of a flexible grid Optical Transport Network (fgOTN). As an extension of the existing OTN technologies, the fgOTN can efficiently support client services with a rate below 1G, and relevant technical discussions have reached a consensus. In the course of fgOTN technical research, dedicated overheads are defined for carrying client services below 1G. How to detect such overheads and perform subsequent processing after alarms are generated has become a key discussion point of fgOTN technologies.

A flexible Optical Transport Network (OTN) Digital Unit (fgODUflex) serves as a container for carrying small-granularity services in an OTN. Low-rate client services such as E-carrier Level 1 (E1), Virtual Container-n (VC-n), Fast Ethernet (FE), and Synchronous Transport Module level-1 (STM-1) can be efficiently carried over the fgODUflex. Client services have respective structural characteristics. Services including VC-n and STM-1 have fixed frame lengths, while Ethernet services consist of 66b blocks. Regardless of the frame structure or the 66b block structure, it is required to identify the structure boundary before parsing the service when demapping a client service from the fgODUflex. The STM-1 service is provided with a frame start indication signal, so after the STM-1 is demapped from the fgODUflex, the frame boundary of the STM-1 can be identified based on frame alignment processing of the STM-1. However, the VC-n is not provided with frame alignment overheads. In current discussions, a dedicated overhead is defined in the fgODUflex to indicate the position of a frame start of the VC-n within the fgODUflex. For Ethernet services based on 66b blocks, although the IEEE 802.3 standard specifies functions for locating 66b boundaries, Ethernet services carried over the fgODUflex generally operate at low rates. Locating 66b boundaries in the manner defined by IEEE 802.3 will introduce relatively large processing latency. Therefore, overheads are also defined in fgOTN technologies to identify 66b boundaries and accelerate boundary identification. During transmission, bit errors will cause erroneous overheads. Erroneous overheads may lead to failure in accurately identifying the structural boundaries of client services, so that the client services cannot be parsed normally. How to identify such erroneous overheads is a technical problem to be solved.

In view of the foregoing problems existing in the related art, corresponding solutions are proposed in the embodiments of the present disclosure, which will be described below in conjunction with the embodiments.

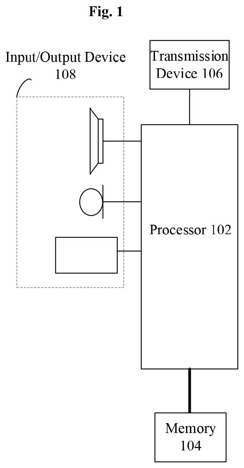

The method embodiments provided in the present application can be implemented on a mobile terminal, a computer terminal or similar computing devices. Taking implementation on a mobile terminal as an example, Fig. 1 is a block diagram of the hardware structure of a mobile terminal for implementing an overhead processing method according to some embodiments of the present disclosure. As shown in Fig. 1, the mobile terminal may include one or more processors 102 (only one is illustrated in Fig. 1; the processor 102 may include but is not limited to processing devices such as a Microcontroller Unit (MCU) and a Field Programmable Gate Array (FPGA)) and a memory 104 configured to store data. The mobile terminal may further include a transmission device 106 configured to implement communication functions and an input/output device 108. Those having ordinary skill in the art can understand that the structure shown in Fig. 1 is merely illustrative and shall not be construed as a limitation on the mobile terminal. For example, the mobile terminal may include more or fewer components than those shown in Fig. 1, or adopt a different configuration.

The memory 104 is configured to store computer programs, such as software programs and modules of application software, for example, the computer programs corresponding to the overhead processing method according to the embodiments of the present disclosure. The processor 102 executes the computer programs stored in the memory 104, so as to perform various functional applications and data processing, that is, implement the foregoing method. The memory 104 may include a high-speed random access memory, and may also include a non-volatile memory, such as one or more magnetic storage devices, flash memory, or other non-volatile solid-state memories. In some embodiments, the memory 104 may further include a remote memory disposed remotely from the processor 102, and the remote memory can be connected to the mobile terminal via a network. Examples of the foregoing network include but are not limited to the Internet, an intranet, a local area network, a mobile communication network and combinations thereof.

The transmission device 106 is configured to receive or send data via a network. Specific examples of the foregoing network may include a wireless network provided by a communication service provider of the mobile terminal. In an embodiment, the transmission device 106 includes a Network Interface Controller (NIC), which can be connected to other network devices via a base station to communicate with the Internet. In an embodiment, the transmission device 106 may be a Radio Frequency (RF) module configured to communicate with the Internet in a wireless manner.

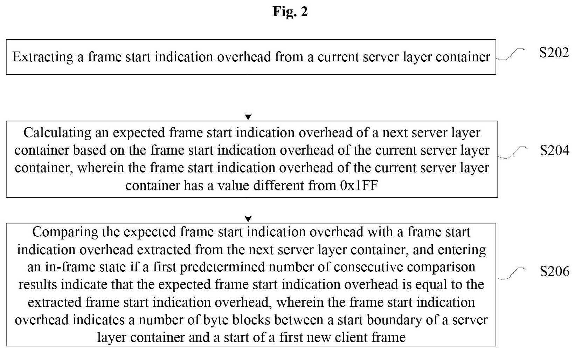

In this embodiment, an overhead processing method is provided. Fig. 2 is a first flowchart of an overhead processing method according to some embodiments of the present disclosure. As shown in Fig. 2, the process includes the following operations S202 to S206.

In operation S202, a frame start indication overhead is extracted from a current server layer container.

In operation S204, an expected frame start indication overhead of a next server layer container is calculated based on the frame start indication overhead of the current server layer container, wherein the frame start indication overhead of the current server layer container has a value different from 0x1FF.

In operation S206, the expected frame start indication overhead is compared with a frame start indication overhead extracted from the next server layer container, and an in-frame state is entered if a first predetermined number of consecutive comparison results indicate that the expected frame start indication overhead is equal to the extracted frame start indication overhead, wherein the frame start indication overhead indicates a number of byte blocks between a start boundary of a server layer container and a start of a first new client frame.

The overhead processing method in the foregoing embodiment is applicable to scenarios including, but not limited to, the VC-n service. The transmission process of the VC-n service is described as follows:
On the transmitting side, the VC-n service is mapped into the payload region of a fgODUflex in a manner including, but not limited to, the Group Management Protocol (GMP). The mapping process includes but is not limited to processing every two rows of a fgODUflex frame as one mapping payload region. One VC-n client frame may be mapped into a single mapping payload region, or span two or more mapping payload regions. After the mapping of the VC-n client frame in a previous mapping payload region is completed, the number X of 16-byte data of a certain VC-n frame transmitted in one or more previous mapping payload regions can be determined, and the number Y of 16-byte data of the certain VC-n frame to be transmitted in the current one or more mapping payload regions can also be obtained. The number of 16-byte data of the client service that each mapping payload region can carry includes but is not limited to Code 128 (C128). If Y is less than or equal to C128-1, it means that the frame start of the next VC-n service frame will appear in the current mapping payload region. In this case, the value Y is taken as the content of a Client Frame Start (CFS) overhead, i.e., the aforementioned frame start indication overhead of the current server layer container. Since GMP mapping introduces additional 16-byte padding blocks, the position of the frame start of the next VC-n client frame in the mapping payload region is not necessarily Y+1. If Y is greater than C128-1, it means that no frame start of the next VC-n client frame will appear in the current mapping payload region, and the CFS is set to a fixed value of 0x1FF. The byte blocks include data blocks and padding blocks.

On the receiving side, the 16-byte data blocks for carrying the VC-n client service and the 16-byte padding blocks in each mapping payload region are calculated according to the mapping overhead of GMP by using an algorithm including, but not limited to, the sigma-delta algorithm. The VC-n client service is extracted from the 16-byte data blocks in the mapping payload region, and the frame boundary of the VC-n is identified according to the Client Frame Start (CFS) overhead in the fgODUflex frame. During service transmission, bit errors may occur and cause errors in the CFS overhead, which further affects the identification of the frame boundary of the VC-n client service. Therefore, detection and processing for the CFS overhead are required. The detection and processing for the CFS overhead involves two states, namely an in-frame state and an out-of-frame state. The current CFS overhead value is extracted from the overheads of the fgODUflex frame. If the value of the CFS overhead is 0x1FF, the next CFS overhead value is extracted until a CFS overhead value Y(i) different from 0x1FF is acquired. An expected value E(i+1) of the next CFS overhead is predicted based on the CFS overhead value Y(i). The expected value E(i+1) of the next CFS overhead is determined based on the current CFS overhead value Y(i), the frame length L of the VC-n client service in units of 16 bytes, the number C128(i) of 16-byte data blocks for carrying the VC-n client services in the current mapping payload region, and the number C128(i+1) of 16-byte data blocks for carrying the VC-n client services in the next mapping payload region.

VC-n services have different frame lengths depending on service types. Exemplarily, the frame length includes but is not limited to 32 bytes, 64 bytes, 128 bytes, 144 bytes, 192 bytes, 576 bytes, or the like. In the application scenario of the embodiments of the present disclosure, the frame length of the VC-n service is preferably 144 bytes, i.e., nine 16-byte blocks. For VC-n services of the same type, there may be requirements for transmitting v cascaded VC-n services, and the frame length of the cascaded VC-n client service is v times the original frame length.

In the foregoing operations, the frame start indication overhead of the current server layer container and the frame start indication overhead of the next server layer container include but are not limited to a Client Frame Start (CFS) overhead. The current server layer container and the next server layer container include but are not limited to the payload region of a fgODUflex. The byte blocks include but are not limited to 16-byte blocks. The first predetermined number includes but is not limited to 2, 3, 4, or the like, and may be set according to actual application scenarios. The foregoing operations are executed in scenarios including, but not limited to, an out-of-frame state of detection and processing for the CFS overhead.

The foregoing operations may be executed by a base station, a terminal, a specific network element or node on the network side, or other devices with similar processing capabilities, which are not limited herein.

With the foregoing operations, the expected overhead of each layer is calculated layer by layer and compared with the actual overhead extracted from the corresponding layer, so as to accurately identify erroneous overheads. The technical problem of erroneous overhead caused by transmission errors in the related art can be solved. The accuracy of overhead determination is improved, and the structural boundaries of client services can be identified accurately.

In an exemplary embodiment, a value of the expected frame start indication overhead of the next server layer container is calculated based on at least one of: a length of a client frame, a first number of client byte blocks carried in the current server layer container, a second number of client byte blocks carried in the next server layer container, the frame start indication overhead of the current server layer container.

In the foregoing operations, the sizes of the current server layer container and the next server layer container include but are not limited to 105 bytes, 106 bytes, or the like. Exemplarily, the length of the client frame is measured in units of 16-byte blocks. The length of the client frame includes but is not limited to 144 bytes, i.e., nine 16-byte blocks. In addition, a plurality of client frames obtained by mapping client services generally have the same length.

In an exemplary embodiment, calculating the expected frame start indication overhead of the next server layer container based on the frame start indication overhead of the current server layer container includes: determining a third number of byte blocks for carrying a client frame in the current server layer container based on the frame start indication overhead of the current server layer container, the first number of client byte blocks carried in the current server layer container, and a length of a client frame; and determining the expected frame start indication overhead of the next server layer container based on a second number of client byte blocks carried in the next server layer container, the third number and the length of the client frame.

In the foregoing operations, the third number refers to the number of remaining byte blocks in the current server layer container that are insufficient to carry one complete client frame after one or more new complete client frames are mapped into the current server layer container, that is, the number of byte blocks forming a part of one complete client frame.

In an exemplary embodiment, determining the third number of the byte blocks for carrying the client frame in the current server layer container based on the frame start indication overhead of the current server layer container, the first number of the client byte blocks carried in the current server layer container, and the length of the client frame includes: determining a first modulo result by performing a modulo operation with a calculation result of the first number and the frame start indication overhead of the current server layer container as a dividend and the length of the client frame as a divisor; determining the third number to be equal to the first modulo result if the first modulo result is not zero; determining the third number to be equal to the length of the client frame if the first modulo result is zero.

In the foregoing operations, the way to obtain the calculation result of the first number and the frame start indication overhead of the current server layer container includes but is not limited to a subtraction operation. Exemplarily, a value obtained by subtracting the frame start indication overhead of the current server layer container from the first number is determined as the calculation result.

The foregoing method is described in detail below in conjunction with the embodiments.

### Embodiment 1

First, relevant parameters used in this embodiment are defined as follows: Y(i) denotes a CFS overhead value, i.e., the aforementioned frame start indication overhead of the current server layer container; L denotes the frame length of a client service; C128(i) denotes the number of 16-byte blocks of VC-n carried in the current ith mapping payload region, i.e., the aforementioned first number; and X(i) denotes the number of 16-byte blocks occupied by a VC-n client frame in the current ith mapping payload region, i.e., the aforementioned third number. Herein, i is a positive integer.

The number X(i) of 16-byte blocks occupied by a VC-n client frame in the current ith mapping payload region is determined according to the CFS overhead value Y(i) which is a value different from 0x1FF, the frame length L (in units of 16-byte blocks) of the VC-n client service, and the number C128(i) of 16-byte blocks of VC-n carried in the current ith mapping payload region.

When the number of remaining 16-byte blocks for carrying VC-n services in the ith mapping payload region, which is calculated as C128(i)-Y(i), is greater than L, it means that after the previous complete TU-12 frame is carried in the ith mapping payload region, the remaining 16-byte blocks available for carrying VC-n client services are sufficient to carry one or more complete VC-n client frames. In this case, the number X(i) of 16-byte blocks of the last complete VC-n client frame that are carried within the current ith mapping payload region is determined by performing a modulo operation with (C128(i)- Y(i)) as the dividend and the frame length L of the VC-n client service as the divisor. If the modulo result is not zero, X(i) = (C128(i)- Y(i)) mod L; otherwise, X(i) = L.

When the number of remaining 16-byte blocks for carrying VC-n services in the ith mapping payload region, which is calculated as C128(i)-Y(i), is less than or equal to L, it means that after the previous complete TU-12 frame is carried in the ith mapping payload region, the remaining 16-byte blocks are insufficient to carry one complete VC-n client frame or can just carry one complete VC-n client frame. After the VC-n client service is mapped into the ith mapping payload region, the number X(i) of 16-byte blocks of one complete VC-n client frame that are carried within the current ith mapping payload region is equal to C128(i) - Y(i). X(i) is greater than or equal to 1 and less than or equal to L.

The above operations are further described with reference to the formulas below:

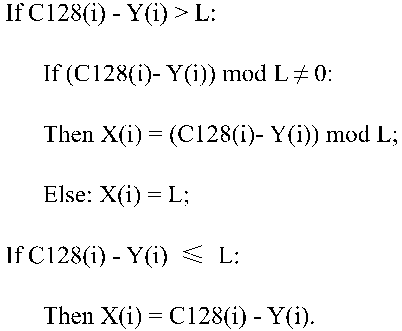

### Embodiment 2

First, relevant parameters used in this embodiment are defined as follows: Y(i) denotes a CFS overhead value, i.e., the aforementioned frame start indication overhead of the current server layer container; L denotes the frame length of a client service; C128(i) denotes the number of 16-byte blocks of VC-n carried in the current ith mapping payload region, i.e., the aforementioned first number; and X(i) denotes the number of 16-byte blocks occupied by a VC-n client frame in the current ith mapping payload region, i.e., the aforementioned third number. Herein, i is a positive integer.

The number X(i) of 16-byte blocks occupied by a VC-n client frame in the current ith mapping payload region is determined according to the CFS overhead value Y(i) which is a value different from 0x1FF, the frame length L (in units of 16-byte blocks) of the VC-n client service, and the number C128(i) of 16-byte blocks of VC-n carried in the current ith mapping payload region.

The number X(i) of 16-byte blocks of the last complete VC-n client frame that are carried within the current ith mapping payload region is determined by performing a modulo operation with (C128(i)- Y(i)) as the dividend and the frame length L of the VC-n client service as the divisor. If the modulo result is not zero, X(i) = (C128(i)- Y(i)) mod L; otherwise, X(i) = L.

The above operations are further described with reference to the formulas below:

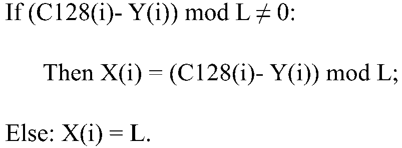

In an exemplary embodiment, determining the expected frame start indication overhead of the next server layer container based on the second number of the client byte blocks carried in the next server layer container, the third number and the length of the client frame includes: determining a fourth number of byte blocks for carrying the client frame in the next server layer container based on the third number and the length of the client frame; determining the expected frame start indication overhead of the next server layer container to be equal to the fourth number if the fourth number is less than or equal to a first difference value between the second number and a predetermined value; determining the expected frame start indication overhead of the next server layer container to be equal to 0x1FF if the fourth number is greater than the first difference value between the second number and the predetermined value.

In an exemplary embodiment, the overhead processing method further includes: determining a fifth number of byte blocks for carrying a client frame in the next server layer container based on the expected frame start indication overhead of the next server layer container and the second number, if the fourth number is less than or equal to the first difference value between the second number and the predetermined value.

In the foregoing operations, the fifth number refers to the number of remaining byte blocks in the next server layer container that are insufficient to carry one complete client frame after the current client frame and one or more new complete client frames are mapped into the next server layer container, that is, the number of byte blocks forming a part of one complete client frame.

In an exemplary embodiment, determining the fifth number of the byte blocks for carrying the client frame in the next server layer container based on the expected frame start indication overhead of the next server layer container and the second number includes: determining a second modulo result by performing a modulo operation with a second difference value between the second number and the expected frame start indication overhead of the next server layer container as a dividend and the length of the client frame as a divisor; and determining the fifth number based on the second modulo result.

In an exemplary embodiment, determining the fifth number based on the second modulo result includes: determining the fifth number to be equal to the second modulo result if the second modulo result is not zero; determining the fifth number to be equal to the length of the client frame if the second modulo result is zero.

In an exemplary embodiment, the overhead processing method further includes: determining a sixth number of byte blocks for carrying a client frame in the next server layer container based on the third number and the second number, if the fourth number is greater than the first difference value between the second number and the predetermined value.

The foregoing method is described in detail below in conjunction with the embodiments.

### Embodiment 3

First, relevant parameters used in this embodiment are defined as follows: Y(i) denotes a CFS overhead value, i.e., the aforementioned frame start indication overhead of the current server layer container; L denotes the frame length of a client service; C128(i) denotes the number of 16-byte blocks of VC-n carried in the current ith mapping payload region, i.e., the aforementioned first number; C128(i+1) denotes the number of 16-byte blocks of VC-n carried in the current (i+1)th mapping payload region, i.e., the aforementioned second number; X(i) denotes the number of 16-byte blocks occupied by a VC-n client frame in the current ith mapping payload region, i.e., the aforementioned third number; and E(i+1) denotes the expected CFS value corresponding to the (i+1)th mapping payload region, i.e., the aforementioned expected frame start indication overhead. Herein, i is a positive integer.

The expected CFS value E(i+1) and X(i+1) corresponding to the (i+1)th mapping payload region are determined according to X(i) calculated in Embodiment 1 and the frame length L of the VC-n client frame.

When (L - X(i)) is less than or equal to (C128(i+1) - 1), which means that the frame start of the VC-n client service appears in the (i+1)th mapping payload region, then E(i+1) = L - X(i). The number X(i+1) of 16-byte blocks of the last complete VC-n client frame that are carried within the current (i+1)th mapping payload region is determined based on the number C128(i+1) of 16-byte blocks of VC-n carried in the (i+1)th mapping payload region and E(i+1). If a modulo operation performed with (C128(i+1)- E(i+1)) as the dividend and the frame length L of the VC-n client frame as the divisor produces a non-zero modulo result, then X(i+1) = (C128(i+1)- E(i+1)) mod L; otherwise, X(i+1) = L.

When (L - X(i)) is greater than (C128(i+1) - 1), which means that the frame start of the VC-n client service does not appear in the (i+1)th mapping payload region, then E(i+1) = 0x1FF. The number X(i+1) of 16-byte blocks of one complete VC-n client frame that are carried within the (i+1)th mapping payload region and one or more preceding mapping payload regions is equal to X(i+1) = C128(i) - Y(i) + C128(i+1).

The above operations are further described with reference to the formulas below:

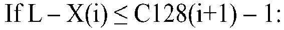

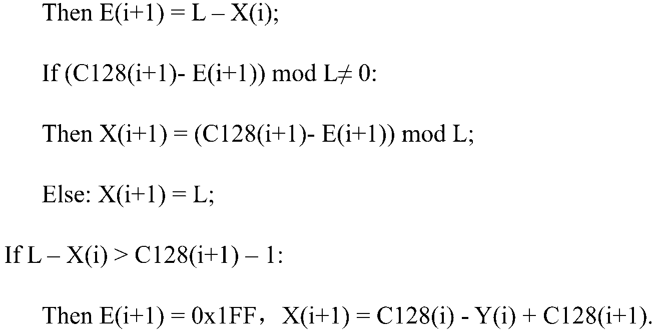

### Embodiment 4

First, relevant parameters used in this embodiment are defined as follows: Y(i) denotes a CFS overhead value, i.e., the aforementioned frame start indication overhead of the current server layer container; L denotes the frame length of a client service; C128(i) denotes the number of 16-byte blocks of VC-n carried in the current ith mapping payload region, i.e., the aforementioned first number; C128(i+1) denotes the number of 16-byte blocks of VC-n carried in the current (i+1)th mapping payload region, i.e., the aforementioned second number; X(i) denotes the number of 16-byte blocks occupied by a VC-n client frame in the current ith mapping payload region, i.e., the aforementioned third number; and E(i+1) denotes the expected CFS value corresponding to the (i+1)th mapping payload region, i.e., the aforementioned expected frame start indication overhead. Herein, i is a positive integer.

The expected CFS value E(i+1) and X(i+1) corresponding to the (i+1)th mapping payload region are determined according to X(i) calculated in the foregoing embodiments and the frame length L of the VC-n client frame.

When (L - X(i)) is less than or equal to (C128(i+1) - 1), which means that the frame start of the VC-n client service appears in the (i+1)th mapping payload region, then E(i+1) = L - X(i). The number X(i+1) of 16-byte blocks of the last complete VC-n client frame that are carried within the current (i+1)th mapping payload region is determined based on the number C128(i+1) of 16-byte blocks of VC-n carried in the (i+1)th mapping payload region and E(i+1). If a modulo operation performed with (C128(i+1)- E(i+1)) as the dividend and the frame length L of the VC-n client frame as the divisor produces a non-zero modulo result, then X(i+1) = (C128(i+1)- E(i+1)) mod L; otherwise, X(i+1) = L.

When (L - X(i)) is greater than (C128(i+1) - 1), which means that the frame start of the VC-n client service does not appear in the (i+1)th mapping payload region, then E(i+1) = 0x1FF. The number X(i+1) of 16-byte blocks of one complete VC-n client frame that are carried within the (i+1)th mapping payload region and one or more preceding mapping payload regions is equal to X(i+1) = C128(i) - Y(i) + C128(i+1).

The above operations are further described with reference to the formulas below:

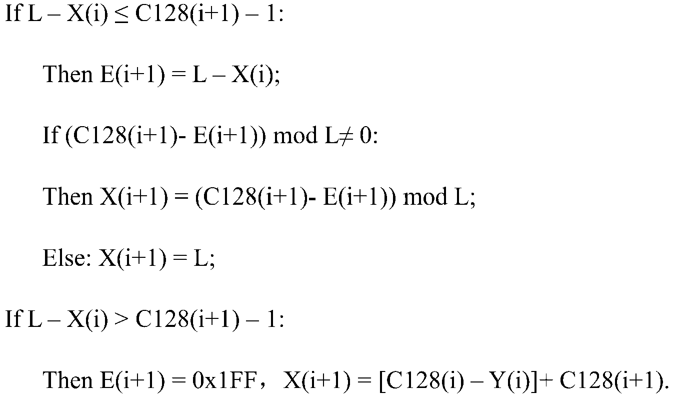

In an exemplary embodiment, the overhead processing method further includes: determining an expected frame start indication overhead of a next server layer container by taking a calculated number of byte blocks for carrying a client frame in the next server layer container as the third number and taking a number of client byte blocks carried in the next server layer container as the second number.

In the above embodiments, the expected overhead values (i.e., the aforementioned expected CFS values) of all subsequent server layer containers can be calculated by repeatedly executing the operations described in the foregoing embodiments. Specifically, this can be realized by setting i to i+1. Under the out-of-frame state, starting from the first received CFS overhead value that has a value different from 0x1FF, if the consecutively received CFS overhead values are equal to the expected CFS values for N consecutive times, the system enters the in-frame state. Under the in-frame state, when the calculated expected CFS value is inconsistent with the extracted CFS overhead value, frame boundary identification for VC-n services is performed according to the calculated expected CFS value, and the next expected CFS value is calculated based on this expected CFS value. Under the in-frame state, if the received CFS overhead values are different from the expected CFS values for M consecutive times, the system enters the out-of-frame state and a CFS loss alarm is generated. The CFS loss alarm triggers generation of a maintenance signal for the VC-n client service. Each of N and M is an integer greater than or equal to 1.

The solution of the present disclosure is described in detail below in conjunction with exemplary embodiments.

### Exemplary embodiment 1

In this exemplary embodiment, a source node and a sink node transmit one Tributary Unit-12 (TU-12) service over the fgODUflex. One TU-12 may contain one or more VC-12s. The overall process includes the following operations.

In operation 1, the source node parses out TU-12 from an STM interface. A TU-12 multiframe has a length of 144 bytes. The TU-12 is mapped into the 2-row mapping payload region of a fgODUflex frame in compliance with the GMP scheme, and CFS overhead is inserted. The length L of a TU-12 multiframe is nine 16-byte blocks. The number of 16-byte blocks of TU-12 frames carried in the 2-row mapping payload region of the fgODUflex frame is 105 or 106. Therefore, the frame start of the TU-12 appears in the 2-row mapping payload region of each fgODUflex frame, which means that the CFS value is not equal to 0x1FF. The CFS overhead is in an out-of-frame state by default, and synchronization processing is performed on the CFS overhead.

In operation 2, the sink node extracts the CFS value Y(i)= 6 from the overhead corresponding to the 2-row mapping payload region of the ith fgODUflex frame. The number C128(i) of 16-byte blocks of TU-12 frames carried in the 2-row mapping payload region of the ith fgODUflex frame, e.g., C128(i) = 105, is carried at the GMP overhead corresponding to the 2-row mapping payload region of the (i-1)th fgODUflex frame.

In operation 3, the number of remaining 16-byte blocks available for carrying TU-12 frames in the 2-row mapping payload region of the ith fgODUflex frame is C128(i) - Y(i) = 105 - 6 = 99 16-byte blocks. The length L of a TU-12 frame is nine 16-byte blocks. Since C128(i) - Y(i)>L, the 99 16-byte blocks can exactly carry 11 complete TU-12 frames. As (C128(i) - Y(i)) mod L = (105 - 6) mod 9 = 0, the number X(i) of 16-byte blocks of the last complete TU-12 frame that are carried within the 2-row mapping payload region of the ith fgODUflex frame is L = 9, which indicates that one complete TU-12 frame has been transmitted.

In operation 4, the number C128(i+1) of 16-byte blocks of TU-12 frames carried in the 2-row mapping payload region of the (i+1)th fgODUflex frame, e.g., C128(i+1) = 106, is extracted from the GMP overhead corresponding to the 2-row mapping payload region of the ith fgODUflex frame. According to the number (X(i) = 9) of 16-byte blocks of the last complete TU-12 frame that are carried in the 2-row mapping payload region of the ith fgODUflex frame obtained in operation 3, and the length (L= 9 16-byte blocks) of the TU-12 frame, it can be determined that L - X(i) = 0 < (C128(i+1) - 1) = 105, which means that multiple TU-12 frames can be carried. Accordingly, the expected CFS overhead value E(i+1) corresponding to the 2-row mapping payload region of the (i+1)th fgODUflex frame is E(i+1) = L - X(i) = 9 - 9 = 0.

In operation 5, the number of remaining 16-byte blocks available for carrying TU-12 frames in the 2-row mapping payload region of the (i+1)th fgODUflex frame is C128(i+1) - E(i+1) = 106 - 0 = 106 16-byte blocks. Since C128(i+1) - E(i+1)>L, the 106 16-byte blocks can carry 11 complete TU-12 frames plus the first 7 16-byte blocks of another complete TU-12 frame. Therefore, the number X(i+1) of 16-byte blocks of the last complete TU-12 frame that are carried within the 2-row mapping payload region of the (i+1)th fgODUflex frame is calculated as X(i+1) = (C128(i+1) - E(i+1)) mod L = (106 - 0) mod 9 = 7.

In operation 6, set i to i+1 and repeat operation 4 and operation 5, so as to calculate the expected CFS overhead values of all subsequent fgODUflex frames such as the (i+2)th fgODUflex frame, the (i+3)th fgODUflex frame, and so on.

In operation 7, if the received CFS overhead values are equal to the expected CFS values for two consecutive times, the system enters the in-frame state. The CFS values are used to identify starts of TU-12 frames, and continuous comparison is performed between the CFS overhead values and the expected CFS values.

In operation 8, under the in-frame state, if the received CFS overhead values are different from the expected CFS values for five consecutive times, the system switches to the out-of-frame state and a CFS loss alarm is generated. The alarm triggers the replacement of normal TU-12 signals with maintenance signals. The CFS synchronization processing restarts from operation 2 until the system returns to the in-frame state.

### Exemplary embodiment 2

In operation 1, the source node parses out 60 TU-12s from an STM interface, and interleaves the 60 TU-12s by byte to form one data stream. A TU-12 multiframe has a length of 144 bytes. The interleaved TU-12 data stream is mapped into the 2-row mapping payload region of a fgODUflex frame in compliance with the GMP scheme, and CFS overhead is inserted. The length of the TU-12 multiframe is nine 16-byte blocks, and the frame length L of the interleaved 60xTU-12 data frame is L = 9*60 = 540 16-byte blocks. The number of 16-byte blocks of the interleaved 60xTU-12 data frame carried in the 2-row mapping payload region of the fgODUflex frame is 453 or 454. There are cases where no frame start of the interleaved 60xTU-12 data frame exists in the 2-row mapping payload region of a fgODUflex frame, which means that the CFS value of that fgODUflex frame is equal to 0x1FF. The CFS overhead is in an out-of-multiframe state by default, and synchronization processing is performed on the CFS overhead.

In operation 2, the sink node extracts the CFS values from the overhead corresponding to the 2-row mapping payload region of fgODUflex frames until a CFS overhead value different from 0x1FF is obtained. Assume that the sink node extracts the CFS value Y(i) = 450 from the overhead corresponding to the 2-row mapping payload region of the ith fgODUflex frame. The number C128(i) of 16-byte blocks of the interleaved 60xTU-12 data frame carried in the 2-row mapping payload region of the ith fgODUflex frame, e.g., C128(i) = 453, is carried at the GMP overhead corresponding to the 2-row mapping payload region of the (i-1)th fgODUflex frame.

In operation 3, the number of remaining 16-byte blocks available for carrying the interleaved 60xTU-12 data frame in the 2-row mapping payload region of the ith fgODUflex frame is C128(i) - Y(i) = 453 - 450 = 3 16-byte blocks. The length L of the interleaved 60xTU-12 data frame is 540 16-byte blocks. Since C128(i) - Y(i)<L, the remaining 3 16-byte blocks are insufficient to carry one complete interleaved 60xTU-12 data frame. The number X(i) of 16-byte blocks of the last complete interleaved 60xTU-12 data frame that are carried within the 2-row mapping payload region of the ith fgODUflex frame is X(i) = C128(i) - Y(i) = 453 - 450 = 3, which indicates that the first 3 16-byte blocks of the last complete interleaved 60xTU-12 data frame are carried in the 2-row mapping payload region of the ith fgODUflex frame.

In operation 4, the number C128(i+1) of 16-byte blocks of the interleaved 60xTU-12 data frame carried in the 2-row mapping payload region of the (i+1)th fgODUflex frame, e.g., C128(i+1) = 454, is extracted from the GMP overhead corresponding to the 2-row mapping payload region of the ith fgODUflex frame. According to the number (X(i) = 3) of 16-byte blocks of the last complete interleaved 60xTU-12 data frame that are carried in the 2-row mapping payload region of the ith fgODUflex frame obtained in operation 3, and the length (L = 540 16-byte blocks) of the interleaved 60xTU-12 data frame, it can be determined that L - X(i) = 540 - 3 = 537 > C128(i+1) -1= 454 - 1 = 453, which means that the 2-row mapping payload region of the (i+1)th fgODUflex frame cannot hold the remaining 537 16-byte blocks of the last complete interleaved 60xTU-12 data frame of the ith fgODUflex frame, and no frame start of the next interleaved 60xTU-12 data frame will appear in the 2-row mapping payload region of the (i+1)th fgODUflex frame. Accordingly, the expected CFS overhead value E(i+1) corresponding to the 2-row mapping payload region of the (i+1)th fgODUflex frame is E(i+1) = 0x1FF.

In operation 5, the 2-row mapping payload region of the (i+1)th fgODUflex frame can provide 454 16-byte blocks of the interleaved 60xTU-12 data frame carried. After the interleaved 60xTU-12 data frame is mapped into the 2-row mapping payload region of the (i+1)th fgODUflex frame, the number X(i+1) of 16-byte blocks of one complete interleaved 60xTU-12 data frame that are carried by the relevant 2-row mapping payload regions of the fgODUflex frames is X(i+1) = C128(i) - Y(i) + C128(i+1) = 453 - 450 + 454 = 457.

In operation 6, set i to i+1 and repeat operation 4 and operation 5, so as to calculate the expected CFS overhead values of all subsequent fgODUflex frames such as the (i+2)th fgODUflex frame, the (i+3)th fgODUflex frame, and so on.

In operation 7, if the received CFS overhead values are equal to the expected CFS values for two consecutive times, the system enters the in-frame state. The CFS values are used to identify starts of frames of the interleaved 60xTU-12 data frame, and continuous comparison is performed between the CFS overhead values and the expected CFS values.

In operation 8, under the in-frame state, if the received CFS overhead values are different from the expected CFS values for five consecutive times, the system switches to the out-of-frame state and a CFS loss alarm is generated. The alarm triggers the replacement of normal signals of the interleaved 60xTU-12 data frame with maintenance signals. The CFS synchronization processing restarts from operation 2 until the system returns to the in-frame state.

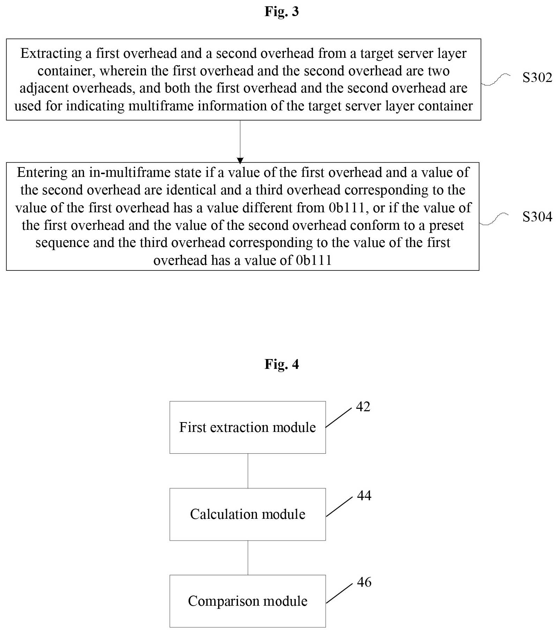

Fig. 3 is a second flowchart of an overhead processing method according to some embodiments of the present disclosure. As shown in Fig. 3, the process includes the following operations S302 and S304.

In operation S302, a first overhead and a second overhead are extracted from a target server layer container, wherein the first overhead and the second overhead are two adjacent overheads, and both the first overhead and the second overhead are used for indicating multiframe information of the target server layer container.

In operation S304, an in-multiframe state is entered if a value of the first overhead and a value of the second overhead are identical and a third overhead corresponding to the value of the first overhead has a value different from 0b111, or if the value of the first overhead and the value of the second overhead conform to a preset sequence and the third overhead corresponding to the value of the first overhead has a value of 0b111.

In the above embodiment, the application scenarios of the overhead processing method include but are not limited to Ethernet services. The transmission process of Ethernet services is described as follows.

On the transmitting side, Ethernet services are mapped into the payload region of a fgODUflex in a manner including, but not limited to, the Interface Mapping Processor (IMP). The Ethernet services adopt a 66b structure. The first bit of the first 66b block in the Ethernet client service stream is mapped to the first bit of the payload region of the first fgODUflex frame, and the last bit of the 20224th 66b block is mapped to the last bit of the payload region of the eleventh fgODUflex frame. The above process is repeated cyclically to complete the entire mapping. The Optical Multiplex Frame Identifier (OMFI) overhead is used for cyclic counting of the eleven fgODUflex frames. Each fgODUflex frame is defined with eight OMFI overheads, and all these OMFI overheads have the same value.

On the receiving side, Ethernet client services are extracted from the payload region of the fgODUflex, and the 66b boundaries of Ethernet services are identified according to the OMFI overheads in the fgODUflex frames. During service transmission, bit errors may occur and cause errors in OMFI overheads, which further affects the identification of 66b boundaries of Ethernet services. It is necessary to perform detection and processing for the OMFI overheads. The detection and processing for the OMFI overheads involves two states, namely an in-multiframe state and an out-of-multiframe state.

In the foregoing embodiment, the target server layer container includes but is not limited to the payload region of a fgODUflex. Detection on OMFI overhead values is performed in the out-of-multiframe state. The first overhead is located before the second overhead. If it is detected that the values of two adjacent OMFI overheads are identical and the HRN corresponding to the value of the first OMFI overhead is a value different from 0b111, or the values of two adjacent OMFI overheads conform to a preset sequence and the HRN corresponding to the value of the first OMFI overhead is 0b111, the system enters the in-multiframe state. The preset sequence is a continuous cycle of values from 0 to 10. After entering the in-multiframe state, the position of the fgODUflex frame in the OMFI multiframe can be determined according to the corresponding OMFI value, so as to identify the 66b boundaries.

In the in-multiframe state, two types of abnormal conditions are defined. One is that the values of two adjacent OMFI overheads are different when the HRN corresponding to the value of the first OMFI overhead is a value different from 0b111. The other is that the values of two adjacent OMFI overheads fail to conform to the preset sequence when the HRN corresponding to the value of the first OMFI overhead is 0b111. The system switches to the out-of-multiframe state when such abnormal conditions are detected for Z consecutive times. If the out-of-multiframe state lasts for a certain period of time, an OMFI loss alarm is generated, and the OMFI loss alarm triggers the generation of maintenance signals for Ethernet client services. Z is an integer greater than or equal to 1. The start position of OMFI in fgODUflex frames shall be maintained during the OMFI out-of-multiframe period.

With the above operations, adjacent overheads in the same server layer are compared with each other, so that erroneous overheads can be accurately identified. This solves the problem of erroneous overheads caused by transmission errors in the related art, improves the accuracy of overhead determination, and enables accurate identification of the boundary structure of client services.

In an exemplary embodiment, the preset sequence is a cycle of values from 0 to 10.

Based on the above description of the embodiments, those having ordinary skill in the art may clearly understand that the overhead processing method according to the foregoing embodiments can be implemented by means of software combined with a necessary general hardware platform. Certainly, the overhead processing method may also be implemented purely by hardware, but in most cases, the former is an exemplary implementation. Based on such understanding, the technical solutions of the embodiments of the present disclosure, or parts thereof contributing to the related art, may be embodied in the form of a computer software product. The computer software product is stored in a storage medium such as Read-Only Memory (ROM), Random Access Memory (RAM), magnetic disk or optical disc, and includes several instructions for instructing a terminal device, which may be a mobile phone, a computer, a server, a network device or the like, to execute the overhead processing method described in each embodiment of the present disclosure.

This embodiment further provides an overhead processing apparatus configured to implement the foregoing embodiments and exemplary implementations, and details already described will not be repeated herein. As used hereinafter, the term "module" refers to a combination of software and/or hardware capable of implementing predetermined functions. Although the overhead processing apparatus described in the following embodiments is preferably implemented by software, implementation by hardware or a combination of software and hardware is also conceivable and feasible.

Fig. 4 is a first structural block diagram of an overhead processing apparatus according to some embodiments of the present disclosure. As shown in Fig. 4, the overhead processing apparatus includes a first extraction module 42, a calculation module 44 and a comparison module 46. The first extraction module 42 is configured to extract a frame start indication overhead from a current server layer container. The calculation module 44 is configured to calculate an expected frame start indication overhead of a next server layer container based on the frame start indication overhead of the current server layer container, wherein the frame start indication overhead of the current server layer container has a value different from 0x1FF. The comparison module 46 is configured to compare the expected frame start indication overhead with a frame start indication overhead extracted from the next server layer container, and enter an in-frame state if a first predetermined number of consecutive comparison results indicate that the expected frame start indication overhead is equal to the extracted frame start indication overhead, wherein the frame start indication overhead indicates a number of byte blocks between a start boundary of a server layer container and a start of a first new client frame.

In an exemplary embodiment, a value of the expected frame start indication overhead of the next server layer container is calculated based on at least one of: a length of a client frame, a first number of client byte blocks carried in the current server layer container, a second number of client byte blocks carried in the next server layer container, the frame start indication overhead of the current server layer container.

In an exemplary embodiment, the calculation module 44 includes a first determination unit and a second determination unit. The first determination unit is configured to determine a third number of byte blocks for carrying a client frame in the current server layer container based on the frame start indication overhead of the current server layer container, the first number of client byte blocks carried in the current server layer container, and a length of a client frame. The second determination unit is configured to determine the expected frame start indication overhead of the next server layer container based on a second number of client byte blocks carried in the next server layer container, the third number and the length of the client frame.

In an exemplary embodiment, the first determination unit includes a first determination sub-unit, a second determination sub-unit and a third determination sub-unit. The first determination sub-unit is configured to determine a first modulo result by performing a modulo operation with a calculation result of the first number and the frame start indication overhead of the current server layer container as a dividend and the length of the client frame as a divisor. The second determination sub-unit is configured to determine the third number to be equal to the first modulo result if the first modulo result is not zero. The third determination sub-unit is configured to determine the third number to be equal to the length of the client frame if the first modulo result is zero.

In an exemplary embodiment, the second determination unit includes a fourth determination sub-unit, a fifth determination sub-unit and a sixth determination sub-unit. The fourth determination sub-unit is configured to determine a fourth number of byte blocks for carrying the client frame in the next server layer container based on the third number and the length of the client frame. The fifth determination sub-unit is configured to determine the expected frame start indication overhead of the next server layer container to be equal to the fourth number if the fourth number is less than or equal to a first difference value between the second number and a predetermined value. The sixth determination sub-unit is configured to determine the expected frame start indication overhead of the next server layer container to be equal to 0x1FF if the fourth number is greater than the first difference value between the second number and the predetermined value.

In an exemplary embodiment, the overhead processing apparatus further includes a first determination module. The first determination module is configured to determine a fifth number of byte blocks for carrying a client frame in the next server layer container based on the expected frame start indication overhead of the next server layer container and the second number, if the fourth number is less than or equal to the first difference value between the second number and the predetermined value.

In an exemplary embodiment, the first determination module includes a third determination unit and a fourth determination unit. The third determination unit is configured to determine a second modulo result by performing a modulo operation with a second difference value between the second number and the expected frame start indication overhead of the next server layer container as a dividend and the length of the client frame as a divisor. The fourth determination unit is configured to determine the fifth number based on the second modulo result.

In an exemplary embodiment, the fourth determination unit includes a seventh determination sub-unit and an eighth determination sub-unit. The seventh determination sub-unit is configured to determine the fifth number to be equal to the second modulo result if the second modulo result is not zero. The eighth determination sub-unit is configured to determine the fifth number to be equal to the length of the client frame if the second modulo result is zero.

In an exemplary embodiment, the overhead processing apparatus further includes a second determination module. The second determination module is configured to determine a sixth number of byte blocks for carrying a client frame in the next server layer container based on the third number and the second number, if the fourth number is greater than the first difference value between the second number and the predetermined value.

In an exemplary embodiment, the overhead processing apparatus further includes a third determination module. The third determination module is configured to determine an expected frame start indication overhead of a next server layer container by taking a calculated number of byte blocks for carrying a client frame in the next server layer container as the third number and taking a number of client byte blocks carried in the next server layer container as the second number.

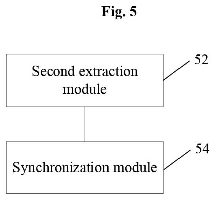

Fig. 5 is a second structural block diagram of an overhead processing apparatus according to some embodiments of the present disclosure. As shown in Fig. 5, the overhead processing apparatus includes a second extraction module 52 and a synchronization module 54. The second extraction module 52 is configured to extract a first overhead and a second overhead from a target server layer container, wherein the first overhead and the second overhead are two adjacent overheads, and both the first overhead and the second overhead are used for indicating multiframe information of the target server layer container. The synchronization module 54 is configured to enter an in-multiframe state if a value of the first overhead and a value of the second overhead are identical and a third overhead corresponding to the value of the first overhead has a value different from 0b111, or if the value of the first overhead and the value of the second overhead conform to a preset sequence and the third overhead corresponding to the value of the first overhead has a value of 0b111.

In an exemplary embodiment, the preset sequence is a cycle of values from 0 to 10.

It should be noted that each of the above modules may be implemented by software or hardware. For hardware implementation, the implementations include but are not limited to the following manners: all the above modules are disposed in a single processor; or the above modules are disposed in different processors in any combination.

The embodiments of the present disclosure further provide a computer-readable storage medium storing a computer program. The computer program, when executed, is configured to perform the operations of any of the foregoing method embodiments.

In an exemplary embodiment, the computer-readable storage medium includes but is not limited to a Universal Serial Bus (USB) flash drive, a Read-Only Memory (ROM), a Random Access Memory (RAM), a mobile hard disk, a magnetic disk, an optical disc, and other media capable of storing computer programs.

The embodiments of the present disclosure further provide an electronic apparatus, which includes a memory and a processor. The memory stores a computer program, and the processor is configured to run the computer program to perform the operations of any of the foregoing method embodiments.

In an exemplary embodiment, the electronic apparatus further includes a transmission device and an input/output device. The transmission device is connected to the processor, and the input/output device is connected to the processor.

For specific examples in this embodiment, reference may be made to the examples described in the foregoing embodiments and exemplary implementations, and details will not be repeated herein.

Apparently, those having ordinary skill in the art shall appreciate that each module or each operation of the present disclosure described above may be implemented by a general-purpose computing device. They may be centralized on a single computing device or distributed across a network composed of multiple computing devices. They may be implemented by program codes executable by the computing device, so as to be stored in a storage device for execution by the computing device. In some cases, the operations shown or described may be performed in an order different from that herein. Alternatively, each module or operation may be manufactured into individual integrated circuit modules, or a plurality of modules or operations thereof may be manufactured into a single integrated circuit module. Therefore, the present disclosure is not limited to any specific combination of hardware and software.

The above descriptions are merely exemplary embodiments of the present disclosure, and are not intended to limit the present disclosure. Various modifications and variations may be made by those having ordinary skill in the art within the scope of the present disclosure. Any modification, equivalent replacement, improvement, and the like made in accordance with the principles of the present disclosure shall fall within the protection scope of the present disclosure.

## Claims

1. An overhead processing method, comprising:
extracting a frame start indication overhead from a current server layer container;
calculating an expected frame start indication overhead of a next server layer container based on the frame start indication overhead of the current server layer container, wherein the frame start indication overhead of the current server layer container has a value different from 0x1FF; and
comparing the expected frame start indication overhead with a frame start indication overhead extracted from the next server layer container, and entering an in-frame state if a first predetermined number of consecutive comparison results indicate that the expected frame start indication overhead is equal to the extracted frame start indication overhead, wherein the frame start indication overhead indicates a number of byte blocks between a start boundary of a server layer container and a start of a first new client frame.

2. The overhead processing method according to claim 1, wherein a value of the expected frame start indication overhead of the next server layer container is calculated based on at least one of: a length of a client frame, a first number of client byte blocks carried in the current server layer container, a second number of client byte blocks carried in the next server layer container, the frame start indication overhead of the current server layer container.

3. The overhead processing method according to claim 1, wherein calculating the expected frame start indication overhead of the next server layer container based on the frame start indication overhead of the current server layer container comprises:
determining a third number of byte blocks for carrying a client frame in the current server layer container based on the frame start indication overhead of the current server layer container, the first number of client byte blocks carried in the current server layer container, and a length of a client frame; and
determining the expected frame start indication overhead of the next server layer container based on a second number of client byte blocks carried in the next server layer container, the third number and the length of the client frame.

4. The overhead processing method according to claim 3, wherein determining the third number of the byte blocks for carrying the client frame in the current server layer container based on the frame start indication overhead of the current server layer container, the first number of the client byte blocks carried in the current server layer container, and the length of the client frame comprises:
determining a first modulo result by performing a modulo operation with a calculation result of the first number and the frame start indication overhead of the current server layer container as a dividend and the length of the client frame as a divisor;
determining the third number to be equal to the first modulo result if the first modulo result is not zero;
determining the third number to be equal to the length of the client frame if the first modulo result is zero.

5. The overhead processing method according to claim 3, wherein determining the expected frame start indication overhead of the next server layer container based on the second number of the client byte blocks carried in the next server layer container, the third number and the length of the client frame comprises:
determining a fourth number of byte blocks for carrying the client frame in the next server layer container based on the third number and the length of the client frame;
determining the expected frame start indication overhead of the next server layer container to be equal to the fourth number if the fourth number is less than or equal to a first difference value between the second number and a predetermined value;
determining the expected frame start indication overhead of the next server layer container to be equal to 0x1FF if the fourth number is greater than the first difference value between the second number and the predetermined value.

6. The overhead processing method according to claim 5, further comprising:
determining a fifth number of byte blocks for carrying a client frame in the next server layer container based on the expected frame start indication overhead of the next server layer container and the second number, if the fourth number is less than or equal to the first difference value between the second number and the predetermined value.

7. The overhead processing method according to claim 6, wherein determining the fifth number of the byte blocks for carrying the client frame in the next server layer container based on the expected frame start indication overhead of the next server layer container and the second number comprises:
determining a second modulo result by performing a modulo operation with a second difference value between the second number and the expected frame start indication overhead of the next server layer container as a dividend and the length of the client frame as a divisor; and
determining the fifth number based on the second modulo result.

8. The overhead processing method according to claim 7, wherein determining the fifth number based on the second modulo result comprises:
determining the fifth number to be equal to the second modulo result if the second modulo result is not zero;
determining the fifth number to be equal to the length of the client frame if the second modulo result is zero.

9. The overhead processing method according to claim 5, further comprising:
determining a sixth number of byte blocks for carrying a client frame in the next server layer container based on the third number and the second number, if the fourth number is greater than the first difference value between the second number and the predetermined value.

10. The overhead processing method according to claim 3, further comprising:
determining an expected frame start indication overhead of a next server layer container by taking a calculated number of byte blocks for carrying a client frame in the next server layer container as the third number and taking a number of client byte blocks carried in the next server layer container as the second number.

11. An overhead processing method, comprising:
extracting a first overhead and a second overhead from a target server layer container, wherein the first overhead and the second overhead are two adjacent overheads, and both the first overhead and the second overhead are used for indicating multiframe information of the target server layer container; and
entering an in-multiframe state if a value of the first overhead and a value of the second overhead are identical and a third overhead corresponding to the value of the first overhead has a value different from 0b111, or if the value of the first overhead and the value of the second overhead conform to a preset sequence and the third overhead corresponding to the value of the first overhead has a value of 0b111.

12. The overhead processing method according to claim 11, wherein the preset sequence is a cycle of values from 0 to 10.

13. An overhead processing apparatus, comprising:
a first extraction module, configured to extract a frame start indication overhead from a current server layer container;
a calculation module, configured to calculate an expected frame start indication overhead of a next server layer container based on the frame start indication overhead of the current server layer container, wherein the frame start indication overhead of the current server layer container has a value different from 0x1FF; and
a comparison module, configured to compare the expected frame start indication overhead with a frame start indication overhead extracted from the next server layer container, and enter an in-frame state if a first predetermined number of consecutive comparison results indicate that the expected frame start indication overhead is equal to the extracted frame start indication overhead, wherein the frame start indication overhead indicates a number of byte blocks between a start boundary of a server layer container and a start of a first new client frame.

14. An overhead processing apparatus, comprising:
a second extraction module, configured to extract a first overhead and a second overhead from a target server layer container, wherein the first overhead and the second overhead are two adjacent overheads, and both the first overhead and the second overhead are used for indicating multiframe information of the target server layer container; and
a synchronization module, configured to enter an in-multiframe state if a value of the first overhead and a value of the second overhead are identical and a third overhead corresponding to the value of the first overhead has a value different from 0b111, or if the value of the first overhead and the value of the second overhead conform to a preset sequence and the third overhead corresponding to the value of the first overhead has a value of 0b111.

15. A computer-readable storage medium, wherein a computer program is stored in the computer-readable storage medium, and the computer program, when executed by a processor, causes the processor to implement operations of the overhead processing method according to any one of claims 1 to 10, or implement operations of the overhead processing method according to any one of claims 11 to 12.

16. An electronic apparatus, comprising a memory, a processor, and a computer program stored in the memory and executable on the processor, wherein the processor is configured to execute the computer program to implement operations of the overhead processing method according to any one of claims 1 to 10, or implement operations of the overhead processing method according to any one of claims 11 to 12.
